(19) Europäisches Patentamt

European Patent Office

Office européen des brevets

(11) **EP 4 656 922 B1**

(12) **EUROPÄISCHE PATENTSCHRIFT**

(45) Veröffentlichungstag und Bekanntmachung des Hinweises auf die Patenterteilung:
**15.07.2026   Patentblatt 2026/29**

(21) Anmeldenummer: **25176729.9**

(22) Anmeldetag: **15.05.2025**

(51) Internationale Patentklassifikation (IPC):
*F16L 11/12* (2006.01)      *F16L 11/11* (2006.01)
*B29C 48/00* (2019.01)      *B29C 48/09* (2019.01)
*B29C 48/13* (2019.01)      *B29C 48/21* (2019.01)
*B29C 48/30* (2019.01)      *B23C 3/20* (2006.01)
*B23C 3/30* (2006.01)       *F24F 13/02* (2006.01)
*H02G 3/04* (2006.01)

(52) Gemeinsame Patentklassifikation (CPC):
**F16L 11/121; B29C 48/09; B29C 48/13;
B29C 48/21; B29C 48/303; F16L 11/11;** B23C 3/20;
F24F 13/02; H02G 3/0468

(54) **KUNSTSTOFFWELLROHR FÜR KLIMA-UND/ODER LÜFTUNGSTECHNIK**

CORRUGATED PLASTIC PIPE FOR AIR CONDITIONING AND/OR VENTILATION TECHNOLOGY

TUYAU ONDULÉ EN MATIÈRE PLASTIQUE POUR LA TECHNIQUE DE CLIMATISATION ET/OU DE VENTILATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **27.05.2024   EP 24178263**

(43) Veröffentlichungstag der Anmeldung:
**03.12.2025   Patentblatt 2025/49**

(73) Patentinhaber: **UNICOR GmbH
97437 Hassfurt (DE)**

(72) Erfinder: **Koßner, Hubert
97523 Schwanfeld (DE)**

(74) Vertreter: **Wagner, Jürgen
Louis Pöhlau Lohrentz
Patentanwälte Partnerschaft mbB
Merianstraße 26
90409 Nürnberg (DE)**

(56) Entgegenhaltungen:
EP-A1- 4 119 830      EP-A2- 2 431 642
CN-A- 112 932 906     DE-U1- 202020 105 627
US-A- 6 024 130

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Kunststoffwellrohre mit den Merkmalen gemäß dem Patentanspruch 1.

Bei der Erfindung handelt es sich um ein vorzugsweise nicht kreisrundes Wellrohr. Das Wellrohr wird mithilfe eines ansich bekannten Korrugators in ansich bekannter Weise hergestellt. Das Wellrohr kann als doppelwandiges Wellrohr ausgebildet sein. Das doppelwandige Wellrohr besteht aus einem im wesentlichen glatten Innenrohr und einem ein Wellenprofil aufweisenden Außenrohr. Das Innenrohr ist vorzugsweise als glattes Rohr ausgebildet, kann aber auch eine geringe Welligkeit aufweisen. Rohre dieser Art werden beispielsweise als Teil eines Raumbelüftungssystems im Baugewerbe eingesetzt, und zwar meist als Lüftungsrohre. Ein anderer Anwendungsbereich für Rohre dieser Bauart ist im Baugewerbe auch als Rohr zur Führung darin aufgenommener Kabel.

Diese Wellrohre werden hauptsächlich hinsichtlich folgender Kriterien bewertet:

- Größe der von der Innenhaut umschlossenen Querschnittsfläche F1. Diese soll möglichst groß sein. Im Falle von Ausführungen als Lüftungsrohre soll der von der Innenhaut umschlossene Strömungsraum (Luftkanal) möglichst groß sein.
- Eignung zu Installationszwecken mit geringem Aufwand zerstörungsfrei gebogen werden zu können. Das Rohr soll möglichst flexibel sein.
- Widerstandsfähigkeit gegen äußere Krafteinflüsse (beispielsweise Druckbelastung) soll möglichst groß sein.

Die ingenieurmäßige Herausforderung besteht darin, die genannten, teils widerstrebenden Kriterien durch die Wahl einer geeigneten Geometrie zu optimieren.

Der Stand der Technik kennt eine Vielzahl von Lösungen, deren wesentliches Unterscheidungsmerkmal die geometrische Ausgestaltung der Querschnittsfläche (ovale Ausführung, Brotlaibform, Stundenglasform usw.) und die Ausprägung der Profilparameter des Wellenprofils ist, und zwar des Profilparameters Wellenbreite und Wellenhöhe.

Die US 6,024,130 A beschreibt Rohre, welche jeweils in Art eines Wellrohres aufeinanderfolgende Anschnitte aufweisen, und zwar im Querschnitt viereckige, nach außen stehende Abschnitte als Wellenberge, gefolgt von im Querschnitt im Wesentlichen runden, nach innen eingezogenen Abschnitten als Wellentäler. Es handelt sich bei diesen Rohren nicht um gattungsgemäße doppellagige Wellrohre bestehend aus einem äußeren Wellrohr und einem koaxialen Innenrohr, sondern um jeweils einlagige Wellrohre. Das Dokument sieht vor, dass die Wanddicke der eingezogenen Abschnitte über den Umfang variiert ist im Sinne einer Wanddickenverstärkung der eingezogenen Abschnitte zur Abstützung der damit verbundenen äußeren Abschnitte.

Die EP 2 431 642 A2 beschreibt mit den Figuren 6a bis 6e des Dokumentes Rohre mit unrundem Querschnitt mit Ellipsenform und mit Brotlaibform. Es handelt sich dabei jedoch nicht um Wellrohre, sondern um glatte Rohre. In Verbindung mit den Figuren 3, 9a und 9b beschreibt das Dokument doppellagige Wellrohre mit nicht näher definiertem Querschnitt.

Die EP 4 119 830 A beschreibt einen flexiblen gänzlich hohl ausgebildeten Wellenbalg zum Kompensieren von Relativbewegungen zweier Bauteile. Der Wellenbalg ist hohl ausgebildet und ziehharmonikaartig beliebig axial und winkelig auseinander- und zusammenschiebbar. Eine doppelwandige Struktur kann vorgesehen sein, wobei grundsätzlich ein durchgehender Abstand zwischen den Wandungen der mehrwandigen Struktur entlang des Wellenbalges realisiert ist.

Die CN 112 932 906 A beschreibt ein Aktuator- und Therapiegerät für Handrehabilitation. Das Gerät weist in den Figuren 6 und 8 in den Fingerbereichen Schutzwellenrohre auf. Diese Schutzwellenrohre sind einwandige Wellrohre mit elliptischem Außendurchmesser. Bei den Schutzwellenrohren handelt es sich nicht um doppellagige Wellrohre, insbesondere nicht um Rohre für Klima- und Lüftungstechnik.

Die DE 20 2020 105 627 U1 beschreibt Formbacken für die Herstellung von Wellrohren in einem Korrugator. Doppellagige Wellrohre sind in dem Dokument nicht beschrieben.

Der Erfindung liegt die Aufgabe zugrunde, ein Kunststoffwellrohr zu schaffen, das bei unrunder Querschnittsform möglichst großen inneren Querschnitt aufweist und dabei hohe Biegbarkeit zu Installationszwecken und hohe Widerstandsfähigkeit gegen Beschädigungen im Betrieb aufweist, vorzugsweise sollen bevorzugte Ausführungen als Strömungsrohre möglichst kleinen Strömungswiderstand haben. Die Erfindung löst die Aufgabe mit dem Gegenstand des Hauptanspruchs 1. Bei diesem Gegenstand handelt es sich um ein Kunststoffwellrohr für Klima- und/oder Lüftungstechnik als zweilagiges Wellrohr ausgebildet, welches ein Wellenprofil aufweist, das die Außenseite des Wellrohrs bildet.

Es ist vorgesehen,

- dass das Wellenprofil aus in Richtung der Achse des Wellrohrs hintereinander angeordneten Wellenbergen mit zwischen unmittelbar benachbarten Wellenbergen angeordneten Wellentälern ausgebildet ist,
- dass der Außenumfang des Wellenprofils durch den äußeren Umfang der Wellenberge gebildet ist und unrund oder rund ausgebildet ist,

- dass der Innenumfang des Wellenprofils durch den äußeren Umfang der Wellentäler gebildet ist und unrund ausgebildet ist.

Die erfindungsgemäße Lösung sieht vor, dass der Innenumfang einen oder mehrere Umfangsabschnitte mit starker Krümmung und einen oder mehrere Umfangsabschnitte mit schwacher Krümmung aufweist, wobei in mindestens einem der Umfangsabschnitte mit starker Krümmung das Wellenprofil größere Wellenhöhe, vorzugsweise zumindest im Durchschnitt größere Wellenhöhe aufweist, als in mindestens einem der Umfangsabschnitte mit schwacher Krümmung.

Hierdurch kann im Vergleich zu Wellrohren, in denen die Profilhöhe H, d.h. die Wellenhöhe des Wellenprofils über den Umfang des Wellenprofils konstant ist, die Fläche des Querschnitts nennenswert vergrößert ist und bei Ausführungen als Lüftungsrohre der Strömungswiderstand verringert ist. Die erfindungsgemäße Ausgestaltung des Wellenprofils mit großer Profilhöhe H in einem Umfangsabschnitt starker Krümmung ist signifikant für die Erreichung der Widerstandsfähigkeit gegen äußere Krafteinflüsse (beispielsweise für das Erreichen der Prüfkraft nach der Norm DIN EN ISO 61386-24). In einem Umfangsabschnitt schwacher Krümmung kann hingegen die Profilhöhe H kleiner ausgeführt werden, da dieser Bereich vorzugsweise nur unwesentlich zum Erreichen der erforderlichen Prüfkräfte beiträgt. In der Konsequenz vergrößert sich bei der erfindungsgemäßen Ausgestaltung bei nahezu gleicher Widerstandsfähigkeit die Fläche F des Querschnitts. Umfangsabschnitte mit schwacher Krümmung, d.h. nicht großem Krümmungsradius R können konkav oder konvex ausgeführt werden. Es kann sich bei der sogenannten schwachen Krümmung aber auch um einen unendlich großen Krümmungsradius also eine Gerade oder eine andere Kurvenform handeln.

Die Profilgeometrie ist vorzugsweise so ausgeführt, dass ein stetiger Übergang zwischen den unterschiedlichen Wellenhöhen stattfindet. Dies kann bedeuten, dass die Wellenhöhe H, vorzugsweise in einem mittleren Bereich eines Umfangsabschnitts mit schwacher Krümmung ein Minimum und die Wellenhöhe H vorzugsweise in einem mittleren Bereich eines Umfangsabschnitts mit starker Krümmung ein Maximum hat.

Das Wellenprofil kann aber auch so ausgeführt sein, dass sich das jeweilige Minimum der Profilhöhe, vorzugsweise im Umfangsabschnitt schwacher Krümmung, oder das jeweilige Maximum der Profilhöhe, vorzugsweise im Umfangsabschnitt starker Krümmung über einen größeren Bereich erstreckt, beispielsweise die Profilhöhe in dem Umfangsabschnitt starker Krümmung im gesamten Umfangsabschnitt maximal ist.

Besonders bevorzugte Ausführungsbeispiele ergeben sich mit den Merkmalen der Unteransprüche. Was die verschiedenen Umfangsabschnitte, d.h. Umfangsabschnitt mit starker Krümmung und Umfangsabschnitt mit schwacher Krümmung betrifft, ist der Begriff starke Krümmung und der Begriff schwache Krümmung primär dahingehend zu verstehen, dass in dem Umfangsabschnitt starker Krümmung die Krümmung stärker ist als in dem Umfangsabschnitt schwacher Krümmung. Starke Krümmung heißt relativ geringer Krümmungsradius, der konstant oder variierend in dem betreffenden Umfangsabschnitt ausgebildet sein kann. Schwache Krümmung heißt relativ großer Krümmungsradius, der ebenfalls konstant oder variierend über den Abschnitt ausgebildet sein kann. Unter schwacher Krümmung ist auch ein linearer Verlauf, d.h. unendlicher Krümmungsradius zu verstehen und insbesondere auch eine konkave Ausgestaltung.

Bei bevorzugten Ausführungen kann vorgesehen sein, dass der Innenumfang mindestens zwei, vorzugsweise einander gegenüberliegende Umfangsabschnitte mit starker Krümmung und mindestens zwei, vorzugsweise einander gegenüberliegende Umfangsabschnitte mit schwacher Krümmung aufweist. Die Querschnittsform solcher Rohre kann hinsichtlich des Innenumfangs symmetrisch oder auch asymmetrisch ausgebildet sein.

Bevorzugte Ausführungen können vorsehen, dass zwei aneinander anschließende, benachbarte Umfangsabschnitte des Innenumfangs, von denen der eine als Umfangsabschnitt starker Krümmung und der andere als Umfangsabschnitt schwacher Krümmung ausgebildet ist, hinsichtlich der unterschiedlichen Wellenhöhe des Wellenprofils und/oder hinsichtlich ihrer unterschiedlichen Krümmung stetig ineinander übergehen, vorzugsweise unter Ausbildung eines stetigen Übergangsabschnitts.

Bei besonders bevorzugten Ausführungen kann für die Ausgestaltung des Wellenprofils innerhalb des Umfangsabschnitts starker Krümmung, d.h. entlang dieses Umfangsabschnitts betrachtet, vorgesehen sein, dass innerhalb von einem oder mehreren, vorzugsweise jedem der Umfangsabschnitte mit starker Krümmung in dem Wellenprofil entlang dem Umfangsabschnitt die Wellenhöhe und/oder die Krümmung des Umfangsabschnitts konstant oder variabel ausgebildet ist, vorzugsweise unter Ausbildung eines, vorzugsweise konvexen Maximums oder unter Ausbildung mehrerer Maxima variabel, vorzugsweise alternierend variabel ausgebildet.

Bei bevorzugten Weiterbildungen kann vorgesehen sein, dass der Verlauf der variierenden Profilhöhe und/oder Krümmung entlang dem Umfangsabschnitt starker Krümmung stetig ist.

Bei besonderen Ausführungen kann für die Ausgestaltung des Wellenprofils innerhalb des Umfangsabschnitts schwacher Krümmung, d.h. für die Ausgestaltung entlang dieses Umfangsabschnitts vorgesehen sein, dass innerhalb von einem oder mehreren, vorzugsweise jedem der Umfangsabschnitte mit schwacher Krümmung in dem Wellenprofil entlang dem Umfangsabschnitt die Wellenhöhe und/oder die Krümmung des Umfangsabschnitts als variabel ausgebildet ist, vorzugsweise unter Ausbildung eines vorzugsweise konkaven Minimums oder mehrerer Minima variierend, vorzugsweise alternierend variierend ausgebildet.

Bei bevorzugten Weiterbildungen kann vorgesehen sein, dass der Verlauf der variierenden Wellenhöhe und/oder Krümmung entlang dem Umfangsabschnitt schwacher Krümmung stetig ist.

Bevorzugte Ausführungen können hinsichtlich der Form des Innenumfangs und/oder der Form des Außenumfangs vorsehen, dass die Form des Innenumfangs und/oder die Form des Außenumfangs unrund ausgebildet ist, vorzugsweise als Ellipsenform und/oder als Stundenglasform und/oder als Brotlaibform, wobei vorzugsweise vorgesehen ist, dass in Abwandlung einer oder mehrerer der oben genannten unrunden Formen mindestens eine oder beide der einander gegenüberliegenden Umfangsabschnitte schwacher Krümmung konvex ausgebildet ist bzw. sind und/oder konkav ausgebildet ist bzw. sind und/oder mit zumindest abschnittsweise linearem Verlauf ausgebildet ist bzw. sind.

Bevorzugte Ausführungen können vorsehen, dass die Form des Innenumfangs und/oder die Form des Außenumfangs unrund

- als Ellipsenform ausgebildet ist und/oder
- als Stundenglasform ausgebildet ist und/oder
- als Brotlaibform ausgebildet ist und/oder
- als Ellipsenformabwandlung dahingehend abgewandelt ausgebildet ist, dass in Abwandlung der Ellipsenform beide der einander gegenüberliegenden Längsseiten des Außenumfangs, die den Umfangsabschnitten des Innenumfangs mit schwacher Krümmung zugeordnet sind, abgeflacht mit zumindest abschnittsweise linearem Verlauf parallel ausgebildet sind, wobei bei der Ellipsenformabwandlung vorzugsweise vorgesehen ist, dass beide der einander gegenüberliegenden Längsseiten des Innenumfangs, die die Umfangsabschnitte des Innenumfangs mit schwacher Krümmung bilden, konvex gekrümmt ausgebildet sind.

Bei bevorzugten Ausführungen der Ellipsenform, der Stundenglasform, der Brotlaibform und/oder der Ellipsenformabwandlung handelt es sich jeweils um Wellrohre, die länglichen Querschnitt aufweisen. Sie sind vorzugsweise so ausgebildet, dass an den gegenüberliegenden langen Seiten des Querschnitts die Umfangsabschnitte des Innenrohrs und des Außenumfangs schwache Krümmung aufweisen und an den gegenüberliegenden kurzen Seiten des Querschnitts die Umfangsabschnitte des Innenumfangs und des Außenumfangs starke Krümmung aufweisen.

Bei der Ellipsenform können die an den gegenüberliegenden langen Seiten ausgebildeten Umfangsabschnitte des Innenumfangs und des Außenumfangs bei schwacher Krümmung jeweils konvex ausgebildet sein, d.h. an den beiden gegenüberliegenden langen Seiten einen konvexen Verlauf im Innenumfang und im Außenumfang aufweisen. An den gegenüberliegenden kurzen Seiten sind die Umfangsabschnitte des Innenumfangs und des Außenumfangs jeweils bei starker Krümmung konvex ausgebildet.

Bei der Stundenglasform sind die an den langen Seiten ausgebildeten Umfangsabschnitte des Innenumfangs und des Außenumfangs bei schwacher Krümmung jeweils konkav ausgebildet, d.h. der Innenumfang und der Außenumfang verläuft im Bereich der gegenüberliegenden langen Seiten jeweils konkav. An den gegenüberliegenden kurzen Seiten sind die Umfangsabschnitte des Innenumfangs und des Außenumfangs bei starker Krümmung konvex ausgebildet.

Bei der Brotlaibform sind die an den langen Seiten ausgebildeten Umfangsabschnitte des Innenumfangs und des Außenumfangs unterschiedlich ausgebildet. An der einen langen Seite sind die Umfangsabschnitte des Innenumfangs und des Außenumfangs abgeflacht, so dass die Außenumfangsabschnitte zumindest im Mittenbereich linear ausgebildet sind, d.h. parallel zur Längsachse des Querschnitts verlaufen. Die Umfangsabschnitte des Innenumfangs sind ebenfalls abgeflacht, jedoch vorzugsweise noch konvex. An der gegenüberliegenden langen Seite sind die Umfangsabschnitte des Innenumfangs und des Außenumfangs jeweils konvex ausgebildet, d.h. nicht abgeflacht. An den gegenüberliegenden kurzen Seiten sind die Umfangsabschnitte des Innenumfangs und des Außenumfangs jeweils bei starker Krümmung konvex ausgebildet.

Bevorzugte Ausführungen können vorsehen, dass die Form des Außenumfangs unrund als Ellipsenformabwandlung ausgebildet ist, wobei in Abwandlung der Ellipsenform beide der einander gegenüberliegenden Längsseiten des Außenumfangs, die den Innenumfangsabschnitten des Innenumfangs mit schwacher Krümmung zugeordnet sind, abgeflacht mit zumindest abschnittsweise linearem Verlauf parallel ausgebildet sind; und/oder dass die Form des Innenumfangs als Ellipsenform ausgebildet ist, wobei die einander gegenüberliegenden Umfangsabschnitte mit schwacher Krümmung konvex ausgebildet sind.

Besonders bevorzugte Ausführungen, insbesondere Weiterbildungen der vorangehenden Ausführungen können vorsehen, dass der durch den Außenumfang des Wellenprofils gebildete äußere Querschnitt des Wellrohrs eine entlang der kleinen Achse ausgerichtete Querschnittshöhe von minimal 48,5 mm bis maximal 52,0 mm und eine entlang der großen Achse ausgerichtete Querschnittsbreite von mindestens 139,7 mm bis maximal 142,3 mm aufweist.

Was die Ausgestaltung des Wellenprofils betrifft, sehen besonders bevorzugte Ausführungen vor, dass entlang dem Innenumfang in dem Wellenprofil die Profilparameter Wellenhöhe und Wellenbreite variieren und vorzugsweise zusätzlich auch Wellenfussbreite und/oder Wellenanstiegswinkel und/oder Teilung variieren bzw. variiert, indem in dem Umfangsabschnitt starker Krümmung die Wellenhöhe den Wert H2, die Wellenbreite den Wert B2, die Wellenfussbreite den Wert A2/2, der Wellenanstiegswinkel den Wert $\alpha2$ und die Teilung den Wert T2 aufweist, und in dem Umfangsabschnitt schwacher Krümmung die Wellenhöhe den Wert H1, die Wellenfussbreite den Wert A1/2, der Wellenanstiegswinkel den Wert $\alpha1$ und die Teilung den Wert T1 aufweist, wobei die Wellenhöhe und die Wellenbreite folgende Relation bilden:

-

$$\text{Relation 1 (Wellenprofilvariante 1): } H2 > H1 \text{ und } B2 = B1$$

oder

-

$$\text{Relation 2 (Wellenprofilvariante 2): } H2 > H1 \text{ und } B2 \neq B1,$$

vorzugsweise

$$B2 > B1$$

oder

-

$$\text{Relation 3 (Wellenprofilvariante 3): } H2 > H1 \text{ und } B2 < B1$$

Bevorzugte Weiterbildungen können vorsehen:

Relation 1.1:
dass die Relation 1 (Wellenprofilvariante 1) in Kombination mit einer oder mehreren der folgenden Relationen gilt:

-

$$A2/2 < A1/2$$

-

$$\alpha2 = \alpha1$$

-

$$T2 = T1$$

oder

Relation 1.2:
dass die Relation 2 (Wellenprofilvariante 2) in Kombination mit einer oder mehrerer folgender Relationen gilt:

-

$$A2/2 < A1/2$$

-

$$\alpha2 \neq \alpha1,$$

vorzugsweise $\alpha2 < \alpha1$

-

$$T2 = T1$$

oder

Relation 1.3:
dass die Relation 3 (Wellenprofilvariante 3) in Kombination mit einer oder mehreren der folgenden Relationen gilt:

-

$$A2/2 = A1/2$$

-

$$\alpha2 \neq \alpha1,$$

vorzugsweise $\alpha2 > \alpha1$

-

$$T2 = T1$$

Gegenstand der Erfindung ist vorzugsweise auch ein Formbackenpaar für den Einsatz in einem Korrugator zur Herstellung eines Wellrohres nach einem der auf das Wellrohr gerichteten Ansprüche, wobei das Formbackenpaar aus einem ersten Formbacken und einem zweiten Formbacken, d.h. beispielsweise linken Formbacken oder rechten Formbacken, gebildet ist, und durch die einander gegenüberliegenden Innenseiten des ersten und des zweiten Formbackens die innere Formfläche des Formbackenpaares gebildet ist. Erfindungsgemäß kann vorgesehen sein, dass die innere Formfläche des Formbackenpaares komplementär mit der Außenseite des herzustellenden Kunststoffwellrohrs ausgebildet ist.

Bei besonders bevorzugten Ausführungen kann eine besonders günstige Fertigung der Formbacken vorgesehen sein. Es kann beispielsweise vorgesehen sein, dass das Formbackenpaar gefertigt ist, indem zur Herstellung der inneren Formfläche die Innenfläche des ersten und des zweiten Formbacken in einem ersten Schritt ausgefräst wird unter Herstellung von ausschließlich Umfangsabschnitten starker Krümmung und in einem zweiten Schritt eine oder mehrere der im ersten Schritt hergestellten Umfangsabschnitte starker Krümmung abgefräst werden unter Herstellung von einem oder mehreren Umfangsabschnitten schwacher Krümmung.

Nachfolgend wird die Erfindung anhand von Zeichnungen noch weiter erläutert.

Dabei zeigen:

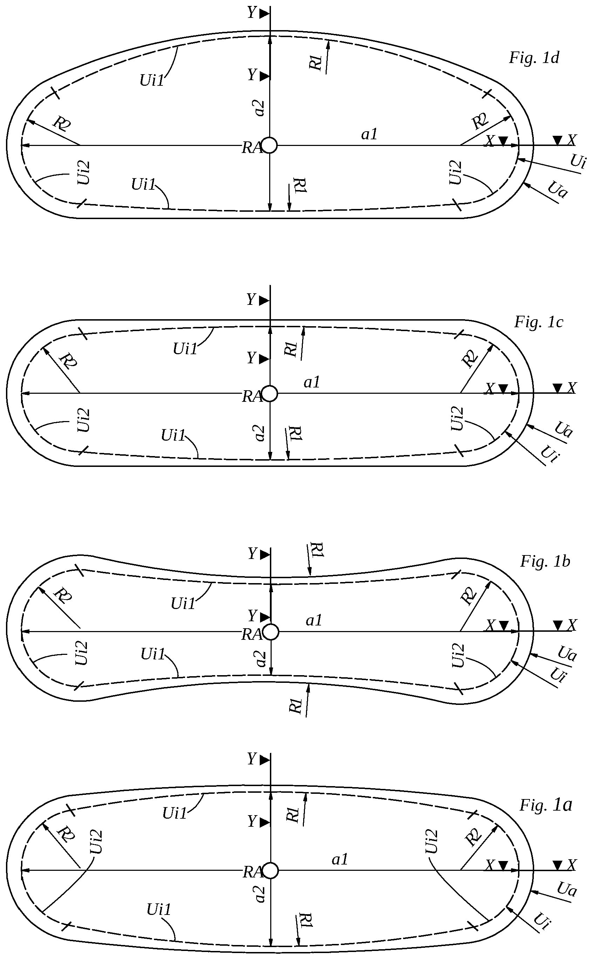

Fig. 1a-1d: Querschnitt des Wellrohrs senkrecht zur Rohrachse, und zwar für vier Wellrohrausführungen, die sich in der Form des Rohrquerschnitts unterscheiden, wie folgt:

Fig. 1a: Querschnitt der Wellrohrausführung A;

Fig. 1b: Querschnitt der Wellrohrausführung B;

Fig. 1c: Querschnitt der Wellrohrausführung C;

Fig. 1d: Querschnitt der Wellrohrausführung D;

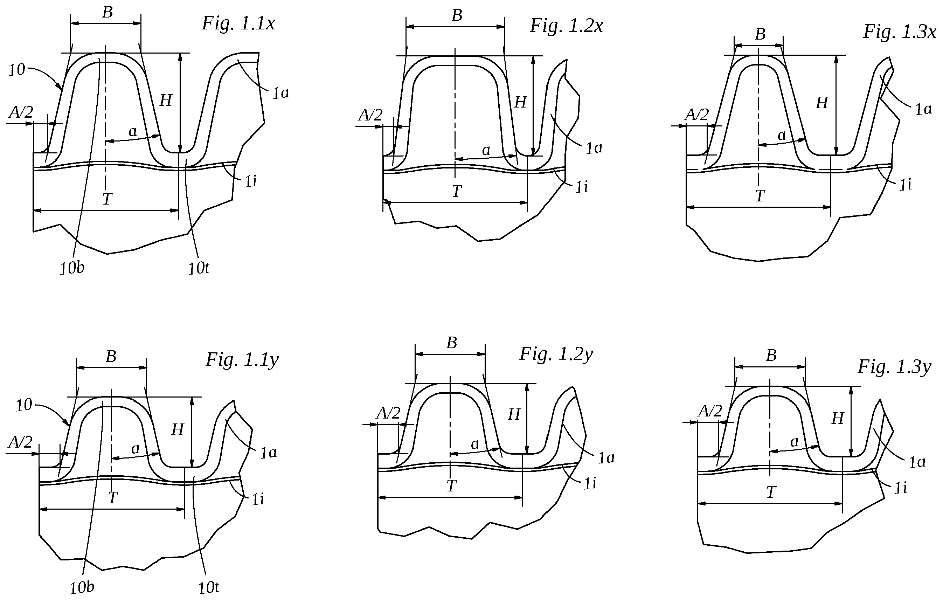

Fig. 1.1x und Fig. 1.1y: Längsschnitte einer Wellenprofilvariante 1 bei den Wellrohrausführungen der Fig. 1a bis 1d, wobei Fig. 1.1x ein Längsschnitt entlang der horizontalen Schnittebene X-X in den Fig. 1a bis 1d ist und Fig. 1.1y ein Längsschnitt entlang der vertikalen Schnittebene Y-Y in den Fig. 1a bis 1d ist;

Fig. 1.2x und Fig. 1.2y: Längsschnitte einer Wellenprofilvariante 2 bei den Wellrohrausführungen der Fig. 1a bis 1d, wobei Fig. 1.2x ein Längsschnitt entlang der horizontalen Schnittebene X-X in den Fig. 1a bis 1d ist und Fig. 1.2y ein Längsschnitt entlang der vertikalen Schnittebene Y-Y in den Fig. 1a bis 1d ist;

Fig. 1.3x und Fig. 1.3y: Längsschnitte einer Wellenprofilvariante 3 bei den Wellrohrausführungen der Fig. 1a bis 1d, wobei Fig. 1.3x ein Längsschnitt entlang der horizontalen Schnittebene X-X in den Fig. 1a bis 1d ist und Fig. 1.3y ein Längsschnitt entlang der vertikalen Schnittebene Y-Y in den Fig. 1a bis 1d ist, jeweils mit eingezeichneten Wellenprofilparameter im Sinne zeichnerisch geometrische Definition der Parameter;

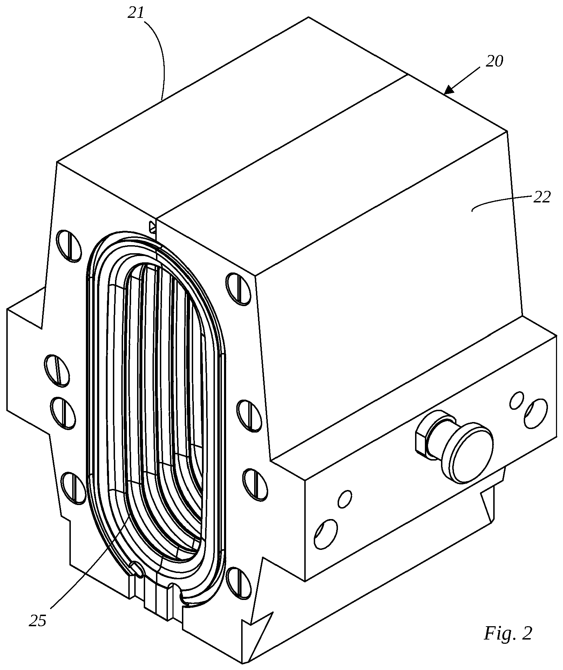

Fig. 2 perspektivische Ansicht eines Formbackenpaares:

Bei den dargestellten Ausführungsbeispielen handelt es sich um Kunststoffverbundrohre ausgebildet als doppellagige Wellrohre mit einem gewellten Außenrohr 1a und einem weitgehend glatten Innenrohr 1i, welches koaxial mit der Achse RA des Wellrohrs in dem gewellten Außenrohr 1a angeordnet und mit den Wellentälern des Außenrohrs 1a verschweißt ist. Das gewellte Außenrohr 1a und das glatte Innenrohr 1i ist in den Längsschnittdarstellungen Fig 1.1x und y bis Fig. 1.3x und y im Schnitt erkennbar.

In den Figuren 1a bis 1d sind vier verschiedene Wellrohrausführungen A, B, C und D dargestellt. Die Ausführungen unterscheiden sich in der Form des Wellrohrquerschnitts, d.h. in der Form des inneren Umfangs Ui, der durch die Umfangskontur des Innenrohrs 1i gebildet ist.

Bei entsprechenden Ausführungen von einwandigen Wellrohren wird der Innenumfang Ui durch die Umfangskontur gebildet, die durch die Wellentäler gebildet wird.

Der innere Umfang Ui ist bei den Wellrohrausführungen A, B, C und D, wie aus den Querschnittsdarstellungen erkennbar, jeweils unrund. Der äußere Umfang Ua, der durch die Kontur des äußeren Umfangs der Wellenberge gebildet wird, ist bei den Ausführungen A, B, C und D, wie in den Querschnittsdarstellungen erkennbar, ebenfalls unrund, jedoch in der Form teilweise, d.h. in bestimmten Umfangsabschnitten, von der Form des Innenumfangs Ui etwas abweichend.

Bei der Wellrohrausführung A in Fig. 1a ist die Form des inneren Umfangs Ui elliptisch mit einer großen horizontale Achse a1 und einer kleinen vertikalen Achse a2. Die Umfangskontur ist jeweils symmetrisch, und zwar um die horizontale Mittelachse und um die vertikale Mittelachse. Der Umfang Ui weist zwei gegenüberliegende Umfangsabschnitte Ui2 mit starker Krümmung, kleinem Krümmungsradius R2, und zwei gegenüberliegenden Umfangsabschnitte Ui1 mit schwacher Krümmung, großem Krümmungsradius R1, auf. Die Umfangsabschnitte schließen tangential jeweils stetig aneinander an unter Bildung der symmetrischen elliptischen Form des inneren Umfangs Ui.

Die Wellrohrausführung B in Fig. 1b ist ebenfalls symmetrisch ausgebildet. Im Unterschied zu der Ausführung A sind bei der Ausführung B die schwach gekrümmten Umfangsabschnitte Ui1 jedoch nicht konvex, sondern konkav. Diese Querschnittsform wird in der Praxis als Stundenglasform bezeichnet.

Die Wellrohrausführung C in Fig. 1c unterscheidet sich von den Wellrohrausführungen A und B darin, dass bei der Wellrohrausführung C die gegenüberliegenden Umfangsabschnitte Ua1 jeweils linear zueinander parallel ausgebildet sind, zwecks Bildung von ebenen Auflagerflächen auf diesen gegenüberliegenden Seiten. Die gegenüberliegenden schwach gekrümmten Umfangsabschnitte Ui1 sind konvex oder zumindest im mittleren Bereich abschnittsweise linear.

Die Wellrohrausführung D in Fig. 1d wird in der Praxis als Brotlaibform bezeichnet. Die Querschnittsform ist unsymmetrisch. Die gegenüberliegenden Abschnitte Ui1 sind in diesem Fall unterschiedlich gestaltet. Der untere Umfangsabschnitt Ui1 ist sehr schwach gekrümmt. Der am äußeren Umfang Ua ausgebildete zugeordnete untere Umfangsabschnitt Ua1 ist linear, d.h. Krümmungsradius unendlich zwecks Bildung einer Auflagerfläche des Rohrs. Der obere Umfangsabschnitt Ui1 ist konvex gekrümmt, und zwar stärker gekrümmt als die einander gegenüberliegenden Umfangsabschnitt Ui1 bei der Wellrohrausführung A in Fig. 1a.

Wesentlich ist, dass bei allen dargestellten Wellrohrausführungen A bis D, wie aus den Fig. 1a bis 1d aus dem Vergleich des Verlaufs von Ui und Ua erkennbar ist, in den stark gekrümmten Umfangsabschnitten Ui2 die Profilhöhe H größer ist als in den Umfangsabschnitten Ui1. Innerhalb der Umfangsabschnitte Ui2 und Ui1 ist die Profilhöhe H jeweils ungefähr konstant, wobei in den schwach gekrümmten Umfangsabschnitten Ui1 im mittleren Bereich ein Minimum der Profilhöhe H ausgebildet ist. Im Bereich des Übergangs der Umfangsabschnitte Ui2 und Ui1 ist bei den in den Figuren dargestellten Ausführungsbeispielen der Übergang zwischen der großen Profilhöhe H und der kleineren Profilhöhe H stetig, wie ebenfalls aus dem Verlauf von Ui und Ua in den Figuren 1a bis 1d erkennbar ist.

Die Wellenprofilparameter H, B, T, A und $\alpha$ sind in den Fig. 1.1x und y bis Fig. 1.3x und y im Einzelnen dargestellt. Diese Figuren zeigen drei verschiedene Wellenprofilvarianten, nämlich die Varianten 1, 2 und 3. Diese Wellenprofilvarianten sind jeweils bei den in der Querschnittsform sich unterscheidenden Wellrohrausführungen A bis D der Figuren 1a bis 1d realisiert.

Die Figuren 1.1x und 1.1y zeigen die Wellenprofilvariante 1.

Die Figuren 1.2x und 1.2y zeigen die Wellenprofilvariante 2.

Die Figuren 1.3x und 1.3y zeigen die Wellenprofilvariante 3.

Die mit Index x bezeichneten Figuren zeigen jeweils den Schnitt X-X in dem stark gekrümmten Umfangsabschnitt Ui2 der Figuren 1a bis 1d. Die mit Index y bezeichneten Figuren zeigen jeweils den Schnitt Y-Y in den schwächer gekrümmten oder geraden Umfangsabschnitt Ui1 der Figuren 1a bis 1d.

Bei den in den Fig. 1.1x und 1.1y bis Fig. 1.3x und 1.3y eingezeichneten Profilparameter handelt es sich um

| | |
|---|---|
| H: | Profilhöhe oder Wellenhöhe des Wellenprofils; |
| B: | Wellenbreite des Wellenprofils; |
| T: | Teilung des Wellenprofils; |
| A/2: | Wellenfußbreite; |
| $\alpha$: | Wellenanstiegswinkel. |

Aus dem Vergleich der mit Index x bezeichneten Schnittdarstellungen Fig. 1.1x, Fig. 1.2x und Fig. 1.3x (Schnittebene X-X im Umfangsabschnitt Ui2) mit den mit Index y bezeichneten Schnittdarstellungen Fig. 1.1y, Fig. 1.2y und Fig. 1.3y (Schnittebene Y-Y im Umfangsabschnitt Ui1) ergibt sich, wie die Profilparameter über den Umfang Ui variieren.

Im Folgenden werden die Profilparameter H, B, T, $\alpha$, A/2 aus der Schnittebene X-X mit Index x und aus der Schnittebene Y-Y mit Index y bezeichnet und miteinander verglichen. Es ergeben sich für die einzelnen Profilvarianten 1, 2 und 3 folgende Relationen:

<u>Wellenprofilvariante 1</u> (Fig. 1.1x und 1.1y)

$$Hx > Hy$$

$$Bx = By$$

$$Tx = Ty$$

$$\alpha x = \alpha y$$

$$Ax/2 < Ay/2$$

<u>Wellenprofilvariante 2</u> (Fig. 1.2x und 1.2y)

$$Hx > Hy$$

$$Bx > By$$

$$Tx = Ty$$

$$\alpha x < \alpha y$$

$$Ax/2 < Ay/2$$

<u>Wellenprofilvariante 3</u> (Fig. 1.3x und 1.3y)

$$Hx > Hy$$

$$Bx < By$$

$$Tx = Ty$$

$$\alpha x > \alpha y$$

$$Ax/2 = Ay/2$$

Die Wellrohre, die die Profilvarianten 1, 2 und 3 realisieren unterscheiden sich durch folgende technische Eigenschaften:

Wellrohre, bei denen das Wellenprofil gemäß Wellenprofilvariante 1 ausgebildet ist, haben Fertigungsvorteile. Diese liegen darin, dass die Formbacken, die für die Fertigung solcher Wellrohre eingesetzt werden, besonders vorteilhaft herstellbar sind. Die Herstellung dieser Formbacken kann nämlich dadurch erfolgen, dass in einem ersten Schritt die innere Formfläche der Formbacken eines Formbackenpaares über den gesamten Umfang z.B. durch Fräsen mit einem einheitlichen Wellenprofil über den gesamten Umfang einheitlich mit den Profilparametern der Schnittebene X-X, d.h. über den gesamten Umfang mit den Parametern Hx, Bx, Tx, Ax/2, $\alpha$x hergestellt wird. In einem zweiten Schritt wird das so über den gesamten Umfang gleichförmige hergestellte Wellenprofil so dann ausschließlich in den Umfangsabschnitten Ui1 durch Abfräsen weiterbearbeitet, und zwar im Sinne einer Reduktion der Profilhöhe Hx auf die Profilhöhe Hy. Dabei ergeben sich in diesen Profilabschnitten die weiteren Profilparameter Bx, Tx, Ax/2 und $\alpha$x automatisch. Die Fertigung der Formbacken ist durch diese bei dieser Wellenprofilvariante möglichen zweistufigen Herstellung sehr einfach, d.h. einfacher als die einstufige Herstellung von Formbacken mit unterschiedlichem Wellenprofil in unterschiedlichen Umfangsabschnitten durch Fräsen.

Die Formbacken, die wie vorangehend beschrieben in zwei Stufen hergestellt werden, produzieren beim Einsatz im Korrugator Wellrohre mit dem Wellenprofil gemäß Profilvariante 1. Wellrohre mit Wellenprofil gemäß der Profilvariante 1 sind also aufgrund der einfachen Fertigung fertigungsmäßig vorteilhaft. Die Steifigkeit gegen Druckbelastungen durch äußere Druckeinwirkung auf die gegenüberliegenden schwächer gekrümmt oder eben ausgebildeten Seiten und die Biegbarkeit des Wellrohrs zu Installationszwecken sind im Sinne eines Kompromisses ausreichend gut.

Ein solches Formbackenpaar 20 mit linkem Formbacken 21 und rechtem Formbacken 22 und an der einander zugewandten Innenseite der Formbacken ausgebildeter innerer Formfläche 25 ist in Fig. 2 gezeigt.

Was die Eigenschaften der Wellrohre gemäß den Wellenprofilvarianten 2 und 3 betrifft:

Wellrohre mit Wellenprofil gemäß Profilvariante 2 weisen breitere Wellenform und dadurch erhöhte Steifigkeit gegen Druckeinwirkung auf, die auf die einander gegenüberliegenden flachen Seiten des Wellrohrs einwirken.

Wellrohre mit Wellenprofil gemäß Profilvariante 3 haben besonders schmale Wellenform und erbringen besonders gute Biegbarkeit bei der Installation der Wellrohre.

Übereinstimmendes Merkmal der Wellrohre mit Wellenprofil der Profilvarianten 1, 2 und 3 ist, dass sie jeweils in den Umfangsabschnitten starker Krümmung, d.h. in dem Umfangsabschnitten Ui2, deutlich höhere Profilhöhe H versehen als in den Umfangsabschnitten schwächerer Krümmung, d.h. in den Umfangsabschnitten Ui1. Diese übereinstimmende Eigenschaft der Profilvarianten 1, 2 und 3 ist wesentlich, um mit den Wellrohren bei der vorgegebenen unrunden Querschnittsform große

Querschnittsflächen zu erhalten, welche im Falle von Lüftungsrohren vorteilhaft sind für die Durchströmung der Rohre und im Falle von Rohren für ein großes Aufnahmevolumen zur Führung von Kabeln oder dergleichen zu erhalten und in beiden Fällen jeweils hohe Druckfestigkeit gegen Beschädigungen durch Druckeinwirkung von außen zu erhalten, insbesondere wenn die Druckeinwirkung auf die gegenüberliegenden flachen Seiten des Wellrohrs erfolgt.

Die Definitionen der Profilparameter H, B, T, A/2, und $\alpha$ ergeben sich aus den Schnittdarstellungen der Figuren: Fig. 1.1x und Fig. 1.1y, Fig. 1.2x und Fig. 1.2y, Fig. 1.3x und Fig. 1.3y, in denen die Profilparameter jeweils zeichnerisch-/geometrisch definiert sind. Die Schnittdarstellungen in diesen Figuren zeigen ein Netzwerk von Ausführungsbeispielen von Wellrohren.

In der nachfolgenden Tabelle 1 sind die Profilparameter zusätzlich basierend auf den Schnittdarstellungen der genannten Figuren zusätzlich mathematisch/geometrisch definiert.

Tabelle 1 Definitionen der Profilparameter des Wellenprofils von Wellrohren

1.1 Profilhöhe **H**

Die Profilhöhe H ist der radiale Abstand zwischen der Außenseite des Rohrs im Bereich eines Wellenbergs und der Außenseite des Rohrs im Bereich eines benachbarten Wellentals.

1.2 Teilung **T**

Die Teilung T ist der axiale Abstand zwischen zwei sich geometrisch exakt wiederholenden Punkten entlang der axialen Rohrrichtung.

Die Teilung T wird typischerweise gemessen zwischen der Streckenhalbierenden eines Wellentals zur Streckenhalbierenden des benachbarten Wellentals.

1.3 Wellentalbreite A eines WellentalsDie Wellentalbreite A ist der axiale Abstand zwischen dem gedachten Schnittpunkt der linken Profilflankentangente und der axialen Erstreckungslinie der Außenseite des Wellentals und dem gedachten Schnittpunkt der rechten Profilflankentangente und der axialen Erstreckungslinie der Außenseite des Wellentals.

Die Profilflankentangente ist die Tangente an die Außenseite der Profilflanke im Bereich der Mitte der Profilhöhe H, d.h. die Tangente bei H/2 und/oder die Tangente an die Außenseite der Profilflanke im mittleren Bereich des Verlaufs der Profilflanke. Dies gilt für Wellen mit Profilflanken, bei denen der Großteil des Verlaufs der Profilflanken linearen Verlauf, d.h. konstante Steigung, aufweist, z.B. bei Wellen, bei denen die Profilflanke über einen überwiegenden Teil der Erstreckung der zugeordneten Profilhöhe H, beispielsweise ca. 70 % der Erstreckung der zugeordneten Profilhöhe H, konstante Steigung aufweist.

Für Wellen mit Profilflanken, bei denen der Großteil des Verlaufs der Profilflanke konvex gekrümmten Verlauf aufweist, ist die Profilflankentangente eine fiktive Tangente, gebildet als Schnittlinie durch die Profilflanke mit erstem Schnittpunkt bei 2/3 Profilhöhe d,h. 2/3H, und zweitem Schnittpunkt bei 1/3 Profilhöhe, d.h. 1/3H.

1.4 Profilbreite B eines Wellenbergs

Die Profilbreite B ist der axiale Abstand zwischen dem gedachten Schnittpunkt der linken Profilflankentangente und der axialen Erstreckungslinie der Außenseite des Wellenbergs und dem gedachten Schnittpunkt der rechten Profilflankentangente und der axialen Erstreckungslinie der Außenseite des Wellenbergs.

Die Profilflankentangente ist die Tangente an die Außenseite der Profilflanke im Bereich der Mitte der Profilhöhe H, d.h. die Tangente bei H/2 und/oder die Tangente an die Außenseite der Profilflanke im mittleren Bereich des Verlaufs der Profilflanke. Dies gilt für Wellen mit Profilflanken, bei denen der Großteil des Verlaufs der Profilflanken linearen Verlauf, d.h. konstante Steigung, aufweist, z.B. bei Wellen, bei denen die Profilflanke über einen überwiegenden Teil der Erstreckung der zugeordneten Profilhöhe H, beispielsweise ca. 70 % der Erstreckung der zugeordneten Profilhöhe H, konstante Steigung aufweist.

Für Wellen mit Profilflanken, bei denen der Großteil des Verlaufs der Profilflanke konvex gekrümmten Verlauf aufweist, ist die Profilflankentangente eine fiktive Tangente, gebildet als Schnittlinie durch die Profilflanke mit erstem Schnittpunkt bei 2/3 Profilhöhe d,h. 2/3H, und zweitem Schnittpunkt bei 1/3 Profilhöhe, d.h. 1/3H.

1.5 Profilwinkel $\alpha$

Der Profilwinkel $\alpha$ eines Wellenbergs ist der Winkel zwischen der radialen Geraden, die streckenhalbierend die Profilbreite B kreuzt, und der Profilflankentangente an die Profilflanke des Wellenbergs.

Die Profilflankentangente ist die Tangente an die Außenseite der Profilflanke im Bereich der Mitte der Profilhöhe H, d.h. die Tangente bei H/2 und/oder die Tangente an die Außenseite der Profilflanke im mittleren Bereich des Verlaufs der Profilflanke. Dies gilt für Wellen mit Profilflanken, bei denen der Großteil des Verlaufs der Profilflanken linearen Verlauf, d.h. konstante Steigung, aufweist, z.B. bei Wellen, bei denen die Profilflanke über einen überwiegenden Teil der Erstreckung der zugeordneten Profilhöhe H, beispielsweise ca. 70 % der Erstreckung der zugeordneten Profilhöhe H, konstante Steigung aufweist.

Für Wellen mit Profilflanken, bei denen der Großteil des Verlaufs der Profilflanke konvex gekrümmten Verlauf aufweist, ist die Profilflankentangente eine fiktive Tangente, gebildet als Schnittlinie durch die Profilflanke mit erstem Schnittpunkt bei 2/3 Profilhöhe d,h. 2/3H, und zweitem Schnittpunkt bei 1/3 Profilhöhe, d.h. 1/3H.

Bezugszeichen:

RA    Achse des Wellrohres, Rohrachse
a1    große Achse des Rohrquerschnitts
a2    kleine Achse des Rohrquerschnitts
Ua    äußerer Umfang
Ui    innerer Umfang
Ui1   Umfangsabschnitt schwacher Krümmung
Ui2   Umfangsabschnitt starker Krümmung
R1    Krümmungsradius schwacher Krümmung, großer Krümmungsradius
R2    Krümmungsradius starker Krümmung, kleiner Krümmungsradius

H       Wellenhöhe des Wellenprofils, Profilhöhe
B       Wellenbreite des Wellenprofils, Profilbreite eines Wellenbergs
T       Teilung des Wellenprofis
A/2     Wellenfussbreite
A       Wellentalbreite
$\alpha$       Wellenanstiegswinkel, Profilwinkel
1       Wellrohr
1a      gewelltes Außenrohr
1i      Innenrohr
10      Wellenprofil
10b     Wellenberg
10t     Wellental
20      Formbackenpaar
21      erster Formbacken
22      zweiter Formbacken
25      innere Formfläche des Formbackenpaares

**Patentansprüche**

1.  Kunststoffwellrohr für Klima- und/oder Lüftungstechnik,

    als zweilagiges Wellrohr (1, 1a) ausgebildet, welches ein Wellenprofil (10) aufweist, das die Außenseite des Wellrohrs (1, 1a) bildet, wobei das zweilagige Wellrohr als doppellagiges Wellrohr ausgebildet ist mit einem gewellten Außenrohr (1a) und einem weitgehend glatten Innenrohr (1i), welches koaxial mit der Achse (RA) des Wellrohrs in dem gewellten Außenrohr (1a) angeordnet und mit den Wellentälern des Außenrohrs (1a) verschweißt ist,
    wobei vorgesehen ist,

    - dass das Wellenprofil (10) aus in Richtung der Achse (RA) des Wellrohrs (1, 1a) hintereinander angeordneten Wellenbergen (10b) mit zwischen unmittelbar benachbarten Wellenbergen (10b) angeordneten Wellentälern (10t) ausgebildet ist,
    - dass der Außenumfang (Ua) des Wellenprofils (10) durch den äußeren Umfang der Wellenberge (10b) gebildet ist und unrund oder rund ausgebildet ist,
    - dass der Innenumfang (Ui) des Wellenprofils (10) durch den äußeren Umfang der Wellentäler (10t) gebildet ist und unrund ausgebildet ist,

    wobei der Innenumfang (Ui) einen oder mehrere Umfangsabschnitte (Ui2) mit starker Krümmung (R2) und einen oder mehrere Umfangsabschnitte (Ui1) mit schwacher Krümmung (R1) aufweist,
    wobei in mindestens einem der Umfangsabschnitte (Ui2) mit starker Krümmung (R2) das Wellenprofil (10) größere Wellenhöhe (H), vorzugsweise zumindest im Durchschnitt größere Wellenhöhe (H) aufweist, als in mindestens einem der Umfangsabschnitte (I1) mit schwacher Krümmung (R1).

2.  Kunststoffwellrohr nach Anspruch 1,
    **dadurch gekennzeichnet,**
    **dass** der Innenumfang (Ui) mindestens zwei, vorzugsweise einander gegenüberliegende Umfangsabschnitte (Ui2) mit starker Krümmung (R2) und mindestens zwei, vorzugsweise einander gegenüberliegende Umfangsabschnitte (I1) mit schwacher Krümmung (R1) aufweist.

3.  Kunststoffwellrohr nach einem der vorangehenden Ansprüche,
    **dadurch gekennzeichnet,**
    **dass** zwei aneinander anschließende, benachbarte Umfangsabschnitte (I1, I2) des Innenumfangs (I), von denen der eine als Umfangsabschnitt (I2) starker Krümmung (R2) und der andere als Umfangsabschnitt (I1) schwacher Krümmung (R1) ausgebildet ist, hinsichtlich der unterschiedlichen Wellenhöhe (H) des Wellenprofils (10) und/oder hinsichtlich ihrer unterschiedlichen Krümmung (R2, R1) stetig ineinander übergehen, vorzugsweise unter Ausbildung eines stetigen Übergangsabschnitts.

4.  Kunststoffwellrohr nach einem der vorangehenden Ansprüche,
    **dadurch gekennzeichnet,**

**dass** innerhalb von einem oder mehreren, vorzugsweise jedem der Umfangsabschnitte (I2) mit starker Krümmung (R2) in dem Wellenprofil (10) entlang dem Umfangsabschnitt die Wellenhöhe (H) und/oder die Krümmung (R2) des Umfangsabschnitts konstant oder variabel ausgebildet ist, vorzugsweise unter Ausbildung eines, vorzugsweise konvexen Maximums oder unter Ausbildung mehrerer Maxima variabel, vorzugsweise alternierend variabel ausgebildet.

5. Kunststoffwellrohr nach Anspruch 4,
   **dadurch gekennzeichnet,**
   **dass** der Verlauf der variierenden Profilhöhe (H) und/oder Krümmung (R2) entlang dem Umfangsabschnitt (I2) starker Krümmung (R2) stetig ist.

6. Kunststoffwellrohr nach einem der vorangehenden Ansprüche,
   **dadurch gekennzeichnet,**
   **dass** innerhalb von einem oder mehreren, vorzugsweise jedem der Umfangsabschnitte (Ui1) mit schwacher Krümmung (R1) in dem Wellenprofil (10) entlang dem Umfangsabschnitt (I1) die Wellenhöhe (H) und/oder die Krümmung (R1) des Umfangsabschnitts als variabel ausgebildet ist, vorzugsweise unter Ausbildung eines vorzugsweise konkaven Minimums oder mehrerer Minima variierend, vorzugsweise alternierend variierend ausgebildet.

7. Kunststoffwellrohr nach Anspruch 6,
   **dadurch gekennzeichnet,**
   **dass** der Verlauf der variierenden Wellenhöhe (H) und/oder Krümmung (R1) entlang dem Umfangsabschnitt (I1) schwacher Krümmung stetig ist.

8. Kunststoffwellrohr nach einem der vorangehenden Ansprüche,
   **dadurch gekennzeichnet,**

   **dass** die Form des Innenumfangs (Ui) unrund als Ellipsenform und/oder als Stundenglasform und/oder als Brotlaibform ausgebildet ist,
   wobei vorzugsweise vorgesehen ist,
   **dass** in Abwandlung einer oder mehrerer der oben genannten unrunden Formen mindestens eine oder beide der einander gegenüberliegenden Umfangsabschnitte (Ui1, Ui1) schwacher Krümmung (R1, R1) konvex ausgebildet ist bzw. sind und/oder konkav ausgebildet ist bzw. sind und/oder mit zumindest abschnittsweise linearem Verlauf ausgebildet ist bzw. sind.

9. Kunststoffwellrohr nach einem der vorangehenden Ansprüche,
   **dadurch gekennzeichnet,**

   **dass** die Form des Außenumfangs (Ua) unrund ausgebildet ist, vorzugsweise als Ellipsenform und/oder Stundenglasform und/oder Brotlaibform ausgebildet ist,
   wobei vorzugsweise vorgesehen ist, dass in Abwandlung einer oder mehrerer der oben genannten unrunden Formen mindestens eine oder beide der einander gegenüberliegenden Umfangsabschnitte (Ui1, Ui1) schwacher Krümmung (R1, R1) konvex ausgebildet ist bzw. sind und/oder konkav ausgebildet ist bzw. sind und/oder mit zumindest abschnittsweise linearem Verlauf ausgebildet ist bzw. sind.

10. Kunststoffwellrohr nach einem der vorangehenden Ansprüche,
    **dadurch gekennzeichnet,**

    **dass** die Form des Innenumfangs (Ui) und/oder die Form des Außenumfangs (Ua) unrund

    - als Ellipsenform ausgebildet ist und/oder
    - als Stundenglasform ausgebildet ist und/oder
    - als Brotlaibform ausgebildet ist und/oder
    - als Ellipsenformabwandlung dahingehend abgewandelt ausgebildet ist, dass in Abwandlung der Ellipsenform beide der einander gegenüberliegenden Längsseiten des Außenumfangs (Ua), die den Umfangsabschnitten (Ui1, Ui1) des Innenumfangs (Ui) mit schwacher Krümmung (R1, R1) zugeordnet sind, abgeflacht mit zumindest abschnittsweise linearem Verlauf parallel ausgebildet sind,

    wobei bei der Ellipsenformabwandlung vorzugsweise vorgesehen ist, dass beide der einander gegenüberliegenden Längsseiten des Innenumfangs (Ui), die die Umfangsabschnitte (Ui1, Ui1) des Innenumfangs (Ui) mit schwacher Krümmung (R1, R1) bilden, konvex gekrümmt ausgebildet sind.

11. Kunststoffwellrohr nach einem der vorangehenden Ansprüche,
**dadurch gekennzeichnet,**
**dass** die Form des Außenumfangs (Ua) unrund als Ellipsenformabwandlung ausgebildet ist, wobei in Abwandlung der Ellipsenform beide der einander gegenüberliegenden Längsseiten des Außenumfangs (Ua), die den Innenumfangsabschnitten (Ui1, Ui1) des Innenumfangs (Ui) mit schwacher Krümmung (R1, R1) zugeordnet sind, abgeflacht mit zumindest abschnittsweise linearem Verlauf parallel ausgebildet sind; und/oder dass die Form des Innenumfangs (Ui) als Ellipsenform ausgebildet ist, wobei die einander gegenüberliegenden Umfangsabschnitte (Ui1, Ui1) mit schwacher Krümmung (R1, R1) konvex ausgebildet sind.

12. Kunststoffwellrohr nach einem der vorangehenden Ansprüche,
**dadurch gekennzeichnet,**
**dass** der durch den Außenumfang (Ua) des Wellenprofils (10) gebildete äußere Querschnitt des Wellrohrs (1, 1a) eine entlang der kleinen Achse (a2) ausgerichtete Querschnittshöhe von minimal 48,5 mm bis maximal 52,0 mm und eine entlang der großen Achse (a1) ausgerichtete Querschnittsbreite von mindestens 139,7 mm bis maximal 142,3 mm aufweist.

13. Kunststoffwellrohr nach einem der vorangehenden Ansprüche,
**dadurch gekennzeichnet,**

**dass** entlang dem Innenumfang (Ui) in dem Wellenprofil (10) die Profilparameter Wellenhöhe (H) und Wellenbreite (B) variieren und vorzugsweise zusätzlich auch Wellenfussbreite (A/2) und/oder Wellenanstiegswinkel ($\alpha$) und/oder Teilung (T) variieren bzw. variiert, indem in dem Umfangsabschnitt (Ui2) starker Krümmung (R2) die Wellenhöhe (H) den Wert H2, die Wellenbreite (B) den Wert B2, die Wellenfussbreite (A/2) den Wert A2/2, der Wellenanstiegswinkel ($\alpha$) den Wert $\alpha$2 und die Teilung (T) den Wert T2 aufweist, und
in dem Umfangsabschnitt (Ui1) schwacher Krümmung (R1) die Wellenhöhe (H) den Wert H1, die Wellenfussbreite (A/2) den Wert A1/2, der Wellenanstiegswinkel ($\alpha$) den Wert $\alpha$1 und die Teilung (T) den Wert T1 aufweist, wobei die Wellenhöhe (H) und die Wellenbreite (B) folgende Relation bilden:

-

### Relation 1 (Wellenprofilvariante 1): H2 > H1 und B2 = B1

oder
-

### Relation 2 (Wellenprofilvariante 2): H2 > H1 und B2 ≠ B1,

vorzugsweise B2 > B1
oder
-

### Relation 3 (Wellenprofilvariante 3): H2 > H1 und B2 < B1,

wobei die Profilparameter wie folgt definiert sind:

- die Wellenhöhe (H) ist der radiale Abstand zwischen der Außenseite des Rohrs im Bereich eines Wellenbergs und der Außenseite des Rohrs im Bereich eines benachbarten Wellentals;
- die Teilung (T) ist der axiale Abstand zwischen zwei sich geometrisch exakt wiederholenden Punkten entlang der axialen Rohrrichtung;
- die Wellenfußbreite (A/2) ist die halbe Wellentalbreite (A) eines Wellentals, wobei die Wellentalbreite (A) der axiale Abstand zwischen dem gedachten Schnittpunkt der linken Profilflankentangente und der axialen Erstreckungslinie der Außenseite des Wellentals und dem gedachten Schnittpunkt der rechten Profilflankentangente und der axialen Erstreckungslinie der Außenseite des Wellentals ist;

- die Wellenbreite (B) ist der axiale Abstand zwischen dem gedachten Schnittpunkt der linken Profilflankentangente und der axialen Erstreckungslinie der Außenseite des Wellenbergs und dem gedachten Schnittpunkt der rechten Profilflankentangente und der axialen Erstreckungslinie der Außenseite des Wellenbergs;
- der Wellenanstiegswinkel ($\alpha$) eines Wellenbergs ist der Winkel zwischen der radialen Geraden, die streckenhalbierend die Wellenbreite (B) kreuzt, und der Profilflankentangente an die Profilflanke des Wellenbergs;
- die Profilflankentangente ist wie folgt definiert:

(i) die Profilflankentangente ist bei Wellen mit Profilflanken, bei denen der Großteil des Verlaufs der Profilflanken linearen Verlauf aufweist, die Tangente an die Außenseite der Profilflanke im Bereich der Mitte der Wellenhöhe (H), d.h. die Tangente bei halber Wellenhöhe und/oder die Tangente an die Außenseite der Profilflanke im mittleren Bereich des Verlaufs der Profilflanke;
(ii) die Profilflankentangente ist bei Wellen mit Profilflanken, bei denen der Großteil des Verlaufs der Profilflanke konvex gekrümmten Verlauf aufweist, eine fiktive Tangente, gebildet als Schnittlinie durch die Profilflanke mit erstem Schnittpunkt bei 2/3 Wellenhöhe (H) und zweitem Schnittpunkt bei 1/3 Wellenhöhe (H).

14. Kunststoffwellrohr nach Anspruch 13,
**dadurch gekennzeichnet,**

Relation 1.1:
dass die Relation 1 (Wellenprofilvariante 1) in Kombination mit einer oder mehreren der folgenden Relationen gilt:

- 

$$A2/2 < A1/2$$

- 

$$\alpha2 = \alpha1$$

- 

$$T2 = T1$$

oder

Relation 1.2:
dass die Relation 2 (Wellenprofilvariante 2) in Kombination mit einer oder mehrerer folgender Relationen gilt:

- 

$$A2/2 < A1/2$$

- 

$$\alpha2 \neq \alpha1,$$

vorzugsweise $\alpha2 < \alpha1$
- 

$$T2 = T1$$

oder

Relation 1.3:
dass die Relation 3 (Wellenprofilvariante 3) in Kombination mit einer oder mehreren der folgenden Relationen gilt:

-

$$A2/2 = A1/2$$

-

$$\alpha2 \neq \alpha1,$$

vorzugsweise $\alpha2 > \alpha1$

-

$$T2 = T1$$

**Claims**

1.  Corrugated plastic pipe for air conditioning and/or ventilation technology, formed as a two-layer corrugated pipe (1, 1a) having a corrugated profile (10) that forms the outer surface of the corrugated pipe (1, 1a), wherein the two-layer corrugated pipe is formed as a double-layer corrugated pipe with a corrugated outer pipe (1a) and a substantially smooth inner pipe (1i), which is arranged coaxially with the axis (RA) of the corrugated pipe within the corrugated outer pipe (1a) and is welded to the corrugation valleys of the outer pipe (1a),

    wherein it is provided that,

    - the corrugated profile (10) is formed by corrugation peaks (10b) arranged one behind the other in the direction of the axis (RA) of the corrugated pipe (1, 1a), with corrugation valleys (10t) located between directly adjacent corrugation peaks (10b),
    - the outer circumference (Ua) of the corrugated profile (10) is formed by the outer circumference of the corrugation peaks (10b) and has a non-circular or circular shape,
    - the inner circumference (Ui) of the corrugated profile (10) is formed by the outer circumference of the corrugation valleys (10t) and has a non-circular shape,

    wherein the inner circumference (Ui) comprises one or more circumferential sections (Ui2) with a strong curvature (R2) and one or more circumferential sections (Ui1) with a slight curvature (R1),
    wherein, in at least one of the circumferential sections (Ui2) with a strong curvature (R2), the corrugated profile (10) has a greater corrugation height (H), preferably at least on average a greater corrugation height (H), than in at least one of the circumferential sections (11) with a slight curvature (R1).

2.  Corrugated plastic pipe according to claim 1,
    **characterized in that**
    the inner circumference (Ui) comprises at least two, preferably opposite, circumferential sections (Ui2) with a strong curvature (R2) and at least two, preferably opposite, circumferential sections (11) with a slight curvature (R1).

3.  Corrugated plastic pipe according to one of the preceding claims,
    **characterized in that**
    two adjoining, adjacent circumferential sections (11, I2) of the inner circumference (I), one of which is formed as a circumferential section (12) with a strong curvature (R2) and the other as a circumferential section (11) with a slight curvature (R1), merge continuously with respect to the different corrugation height (H) of the corrugated profile (10) and/or with respect to their different curvatures (R2, R1), preferably forming a continuous transition section.

4.  Corrugated plastic pipe according to one of the preceding claims,
    **characterized in that**
    within one or more, preferably each, of the circumferential sections (12) with a strong curvature (R2) in the corrugated profile (10), the corrugation height (H) and/or the curvature (R2) of the circumferential section is constant or variable along the circumferential section, preferably forming a single, preferably convex maximum, or forming multiple maxima in a variable, preferably alternating variable manner.

5. Corrugated plastic pipe according to claim 4,
   **characterized in that**
   the course of the varying profile height (H) and/or curvature (R2) is continuous along the circumferential section (12) of strong curvature (R2).

6. Corrugated plastic pipe according to one of the preceding claims,
   **characterized in that**
   within one or more, preferably each, of the circumferential sections (Ui1) with a slight curvature (R1) in the corrugated profile (10), the corrugation height (H) and/or the curvature (R1) of the circumferential section is variable along the circumferential section (11), preferably forming a preferably concave minimum, or multiple minima in a varying, preferably alternating varying manner.

7. Corrugated plastic pipe according to claim 6,
   **characterized in that**
   the course of the varying corrugation height (H) and/or curvature (R1) is continuous along the circumferential section (11) of slight curvature.

8. Corrugated plastic pipe according to one of the preceding claims,
   **characterized in that**

   the shape of the inner circumference (Ui) is non-circular, having an elliptical shape, and/or an hourglass shape, and/or the shape of a loaf of bread, wherein it is preferably provided that,
   as a modification of one or more of the non-circular shapes mentioned above, at least one or both of the opposing circumferential sections (Ui1, Ui1) with a slight curvature (R1, R1) are formed to be convex and/or concave and/or have, at least in sections, a linear profile.

9. Corrugated plastic pipe according to one of the preceding claims,
   **characterized in that**

   the shape of the outer circumference (Ua) is formed non-circular, preferably having an elliptical shape, and/or an hourglass shape, and/or the shape of a loaf of bread,
   wherein it is preferably provided that, as a modification of one or more of the non-circular shapes mentioned above, at least one or both of the opposing circumferential sections (Ui1, Ui1) with a slight curvature (R1, R1) are formed to be convex and/or concave and/or have, at least in sections, a linear profile.

10. Corrugated plastic pipe according to one of the preceding claims,
    **characterized in that**

    the shape of the inner circumference (Ui) and/or the shape of the outer circumference (Ua) is non-circular,

    - having an elliptical shape, and/or
    - having an hourglass shape, and/or
    - having the shape of a loaf of bread, and/or
    - is designed as a modified elliptical shape such that, in a modification of the elliptical shape, both of the opposing longitudinal sides of the outer circumference (Ua), which are associated to the circumferential sections (Ui1, Ui1) of the inner circumference (Ui) with slight curvature (R1, R1), are formed to run parallel flattened at least in sections with linear course,

    wherein in the modified elliptical shape, it is preferably provided that both of the opposing longitudinal sides of the inner circumference (Ui), which form the circumferential sections (Ui1, Ui1) of the inner circumference (Ui) with a slight curvature (R1, R1), are designed to be convexly curved.

11. Corrugated plastic pipe according to one of the preceding claims,
    **characterized in that**
    the shape of the outer circumference (Ua) is non-circular in a modified elliptical shape, wherein, in the modified elliptical shape, both of the opposing longitudinal sides of the outer circumference (Ua) associated to the inner circumferential sections (Ui1, Ui1) of the inner circumference (Ui) with slight curvature (R1, R1), are formed to run parallel flattened at least in sections with linear course; and/or that the shape of the inner circumference (Ui) is formed as an elliptical shape, wherein the opposing circumferential sections (Ui1, Ui1) with slight curvature (R1, R1) are formed to be convex.

12. Corrugated plastic pipe according to one of the preceding claims,
**characterized in that**
the outer cross-section of the corrugated pipe (1, 1a), formed by the outer circumference (Ua) of the corrugated profile (10), has a cross-sectional height aligned along the small axis (a2) of at least 48.5 mm to at most 52.0 mm and a cross-sectional width aligned along the large axis (a1) of at least 139.7 mm to at most 142.3 mm.

13. Corrugated plastic pipe according to one of the preceding claims,
**characterized in that**

along the inner circumference (Ui) in the corrugated profile (10), the profile parameters corrugation height (H) and corrugation width (B) vary, and preferably also the corrugation base width (A/2) and/or the corrugation rise angle (α) and/or the partition (T) vary,

such that, in the circumferential section (Ui2) with strong curvature (R2), the corrugation height (H) has the value H2, the corrugation width (B) has the value B2, the corrugation base width (A/2) has the value A2/2, the corrugation rise angle (α) has the value α2, and the partition (T) has the value T2, and in the circumferential section (Ui1) with slight curvature (R1), the corrugation height (H) has the value H1, the corrugation base width (A/2) has the value A1/2, the corrugation rise angle (α) has the value α1, and the partition (T) has the value T1, wherein the corrugation height (H) and the corrugation width (B) have the following relation:

-

## Relation 1 (corrugated profile option 1): H2 > H1 and B2 = B1

or
-

## Relation 2 (corrugated profile option 2): H2 > H1 and B2 ≠ B1,

preferably B2 > B1
or
-

- ## Relation 3 (corrugated profile option 3): H2 > H1 and B2 < B1,

where the profile parameters are defined as follows:

- The corrugation height (H) is the radial distance between the outer side of the pipe in the area of a corrugation peak and the outer side of the pipe in the area of an adjacent corrugation valley;
- the partition (T) is the axial distance between two geometrically identical recurring points along the axial direction of the pipe;
- the corrugation base width (A/2) is half the corrugation valley width (A) of a corrugation valley, wherein the corrugation valley width (A) is the axial distance between the imaginary intersection point of the left profile flank tangent and the axial extension line of the outer side of the corrugation valley, and the imaginary intersection point of the right profile flank tangent and the axial extension line of the outer side of the corrugation valley;
- the corrugation width (B) is the axial distance between the imaginary intersection point of the left profile flank tangent and the axial extension line of the outer side of the corrugation peak, and the imaginary intersection point of the right profile flank tangent and the axial extension line of the outer side of the corrugation peak;
- the corrugation rise angle (α) of a corrugation peak is the angle between the radial straight line that crosses the corrugation width (B) at the midpoint and the profile flank tangent of the corrugation peak;

- the profile flank tangent is defined as follows:

(i) for corrugations with profile flanks where the majority of the flank's profile is linear, the profile tangent is the tangent to the outer side of the profile flank in the region of the midpoint of the corrugation height (H), i.e., the tangent at half the corrugation height and/or the tangent to the outer side of the profile flank in the middle region of the profile flank's course;

(ii) for corrugations with profile flanks where the majority of the flank's profile is convexly curved, the profile tangent is an imaginary tangent formed as the line of intersection through the profile flank, with the first intersection point at 2/3 of the corrugation height (H) and the second intersection point at 1/3 of the corrugation height (H).

14. Corrugated plastic pipe according to claim 13, **characterized in that**

Relation 1.1:
the relation 1 (corrugated profile option 1) applies in combination with one or more of the following relations:

-

$$A2/2 < A1/2$$

-

$$\alpha2 = \alpha1$$

-

$$T2 = T1$$

or

Relation 1.2:
the relation 2 (corrugated profile option 2) applies in combination with one or more of the following relations:

-

$$A2/2 < A1/2$$

-

$$\alpha2 \neq \alpha1,$$

preferably $\alpha2 < \alpha1$

-

$$T2 = T1$$

or

Relation 1.3:
the relation 3 (corrugated profile option 3) applies in combination with one or more of the following relations:

-

$$A2/2 = A1/2$$

-

$$\alpha2 \neq \alpha1,$$

preferably $\alpha2 > \alpha1$

-

$$T2 = T1$$

**Revendications**

1. Conduit ondulé en plastique pour la climatisation et/ou la ventilation, conçu sous la forme d'un tube ondulé à deux couches (1, 1a) présentant un profil ondulé (10) qui forme la face extérieure du tube ondulé (1, 1a), le tube ondulé à deux couches étant conçu comme un tube ondulé à double paroi comprenant un tube extérieur ondulé (1a) et un tube intérieur (1i) essentiellement lisse, qui est disposé coaxialement à l'axe (RA) du tube ondulé à l'intérieur du tube extérieur ondulé (1a) et soudé aux creux des ondulations du tube extérieur (1a),

   il est prévu,

   - que le profil ondulé (10) est constitué de crêtes (10b) disposées les unes à la suite des autres dans la direction de l'axe (RA) du tube ondulé (1, 1a), avec des creux (10t) situés entre des crêtes (10b) immédiatement adjacentes,
   - que le pourtour extérieur (Ua) du profil ondulé (10) est formé par le pourtour extérieur des crêtes (10b) et qu'il est de forme non circulaire ou circulaire,
   - que le périmètre intérieur (Ui) du profil ondulé (10) est formé par le périmètre extérieur des creux (10t) et présente une forme non circulaire,

   où le périmètre intérieur (Ui) comporte une ou plusieurs sections périphériques (Ui2) présentant une forte courbure (R2) et une ou plusieurs sections périphériques (Ui1) présentant une faible courbure (R1), le profil ondulé (10) présentant, dans au moins l'une des sections périphériques (Ui2) à forte courbure (R2), une hauteur d'onde (H) plus importante, de préférence une hauteur d'onde (H) plus importante au moins en moyenne, que dans au moins l'une des sections périphériques (I1) à faible courbure (R1).

2. Conduit ondulé en plastique selon la revendication 1,
   **caractérisé en ce que**
   le pourtour intérieur (Ui) comporte au moins deux sections périphériques (Ui2), de préférence opposées, présentant une forte courbure (R2), et au moins deux sections périphériques (I1), de préférence opposées, présentant une courbure faible (R1).

3. Conduit ondulé en plastique selon l'une des revendications précédentes,
   **caractérisé en ce que**
   deux segments de périphérie adjacents et contigus (I1, I2) du pourtour intérieur (I), dont l'une est conçue comme une section périphérique (I2) à forte courbure (R2) et l'autre comme une section périphérique (11) à faible courbure (R1), se fondent de manière continue l'une dans l'autre en ce qui concerne la différence de hauteur d'onde (H) du profil d'onde (10) et/ou en ce qui concerne leur courbure différente (R2, R1), de préférence en formant une section de transition continue.

4. Conduit ondulé en plastique selon l'une des revendications précédentes,
   **caractérisé en ce que**
   au sein d'une ou plusieurs sections périphériques (I2) - de préférence chacune d'entre elles - présentant une forte courbure (R2) dans le profil ondulé (10), la hauteur d'onde (H) et/ou la courbure (R2) de la section périphérique sont constantes ou variables, de préférence en formant un maximum, de préférence convexe, ou en formant plusieurs maxima variables, de préférence en alternance.

5. Conduit ondulé en plastique selon la revendication 4,
   **caractérisé en ce que**

le tracé de la hauteur du profil (H) et/ou de la courbure (R2) le long de la section circonférentielle (I2) à forte courbure (R2) est continue.

6. Conduit ondulé en plastique selon l'une des revendications précédentes,
   **caractérisé en ce que**
   au sein d'une ou plusieurs sections périphériques (Ui1) - de préférence chacune d'entre elles - présentant une faible courbure (R1) dans le profil ondulé (10) le long de la section périphérique (11), la hauteur d'onde (H) et/ou la courbure (R1) de la section périphérique sont conçues comme variables, de préférence en formant un minimum de préférence concave ou plusieurs minima, de préférence en variant de manière alternée.

7. Conduit ondulé en plastique selon la revendication 6,
   **caractérisé en ce que**
   le tracé de la hauteur des ondes (H) et/ou de la courbure (R1) le long de la section périphérique (11) à faible courbure est continue.

8. Conduit ondulé en plastique selon l'une des revendications précédentes,
   **caractérisé en ce que**

   la forme du périmètre intérieur (Ui) est non circulaire, se présentant sous la forme d'une ellipse et/ou d'un sablier et/ou d'une miche de pain,
   Il est de préférence prévu que,
   en variante d'une ou plusieurs des formes non circulaires susmentionnées, au moins l'une ou les deux des sections périphériques opposées (Ui1, Ui1) de faible courbure (R1, R1) sont de forme convexe et/ou de forme concave et/ou présentent un tracé au moins partiellement linéaire.

9. Conduit ondulé en plastique selon l'une des revendications précédentes, **caractérisé en ce que**

   la forme du pourtour extérieur (Ua) est non circulaire, de préférence en forme d'ellipse et/ou de sablier et/ou de miche de pain,
   Il est de préférence prévu que, en variante d'une ou plusieurs des formes non circulaires susmentionnées, au moins l'une ou les deux des sections périphériques opposées (Ui1, Ui1) de faible courbure (R1, R1) sont de forme convexe et/ou de forme concave et/ou présentent un tracé au moins partiellement linéaire.

10. Conduit ondulé en plastique selon l'une des revendications précédentes,
    **caractérisé en ce que**

    la forme du périmètre intérieur (Ui) et/ou celle du périmètre extérieur (Ua) ne sont pas circulaires

    - qui a la forme d'une ellipse et/ou
    - qui a la forme d'un sablier et/ou
    - qui se présente sous la forme d'une miche de pain et/ou
    - est conçue sous la forme d'une variante de la forme elliptique, de telle sorte que, dans cette variante, les deux côtés longitudinaux opposés du pourtour extérieur (Ua), auxquels sont associés les segments de pourtour (Ui1, Ui1) du pourtour intérieur (Ui) à faible courbure (R1, R1), sont formés parallèlement aplatis avec au moins une section linéaire,

    dans la transformation en forme elliptique, il est de préférence prévu que les deux côtés longitudinaux opposés du pourtour intérieur (Ui), qui forment les segments de pourtour (Ui1, Ui1) du pourtour intérieur (Ui) présentant une faible courbure (R1, R1), soient de forme convexe.

11. Conduit ondulé en plastique selon l'une des revendications précédentes,
    **caractérisé en ce que**
    la forme du pourtour extérieur (Ua) est non circulaire et présente une variante de forme elliptique, dans laquelle, en tant que variante de la forme elliptique, les deux côtés longitudinaux opposés du pourtour extérieur (Ua), qui sont associés aux segments du pourtour intérieur (Ui1, Ui1) du périmètre intérieur (Ui) présentant une faible courbure (R1, R1), sont formés parallèlement aplatis avec au moins une section linéaire; et/ou que la forme du pourtour intérieur (Ui) est réalisée sous forme d'ellipse, les segments de pourtour opposés (Ui1, Ui1) présentant une faible courbure (R1, R1) étant réalisés de manière convexe.

**12.** Conduit ondulé en plastique selon l'une des revendications précédentes, **caractérisé en ce que** la section transversale extérieure du tube ondulé, formée par le périmètre extérieur (Ua) du profil ondulé (10) présente une hauteur de section orientée le long du petit axe (a2) comprise entre 48,5 mm au minimum et 52,0 mm au maximum, et une largeur de section orientée le long du grand axe (a1) comprise entre 139,7 mm au minimum et 142,3 mm au maximum.

**13.** Conduit ondulé en plastique selon l'une des revendications précédentes, **caractérisé en ce que**

le long du périmètre intérieur (Ui) du profil ondulé (10), les paramètres de profil que sont la hauteur d'onde (H) et la largeur d'onde (B) varient et que, de préférence, la largeur du pied d'onde (A/2) et/ou l'angle de montée de l'onde (α) et/ou le pas (T) varient également,

de telle sorte que, dans la section périphérique (Ui2) à forte courbure (R2), la hauteur de onde (H) prenne la valeur H2, la largeur d'onde (B) la valeur B2, la largeur au pied de l'onde (A/2) la valeur A2/2, l'angle de montée de l'onde (α) la valeur α2 et le pas (T) la valeur T2, et

dans la section périphérique (Ui1) à faible courbure (R1), la hauteur de l'onde (H) prend la valeur H1, la largeur à la base de l'onde (A/2) prend la valeur A1/2, l'angle d'inclinaison de l'onde (α) prend la valeur α1 et le pas (T) prend la valeur T1,

la hauteur d'onde (H) et la largeur d'onde (B) satisfaisant la relation suivante:

-

## Relation 1 (variante 1 du profil d'onde) : H2 > H1 et B2 = B1

ou

-

## Relation 2 (variante 2 du profil d'onde) : H2 > H1 et B2 ≠ B1,

de préférence B2 > B1

ou

-

## Relation 3 (variante 3 du profil d'onde) : H2 > H1 et B2 < B1,

les paramètres du profil étant définis comme suit:

- la hauteur d'onde (H) correspond à la distance radiale entre la face extérieure du tube au niveau d'un sommet d'onde et la face extérieure du tube au niveau d'un creux d'onde adjacent ;
- le pas (T) est la distance axiale entre deux points se répétant géométriquement de manière exacte le long de l'axe du tube ;
- la largeur de la base de l'onde (A/2) est la moitié de la largeur du creux (A) d'un creux, la largeur du creux (A) étant la distance axiale entre le point d'intersection imaginaire de la tangente au flanc gauche du profil et la ligne d'extension axiale du côté extérieur du creux, et le point d'intersection imaginaire de la tangente au flanc droit du profil et la ligne d'extension axiale du côté extérieur du creux ;
- la largeur d'onde (B) est la distance axiale entre le point d'intersection imaginaire de la tangente au flanc gauche du profil et la ligne d'extension axiale de la face extérieure du sommet de l'onde, et le point d'intersection imaginaire de la tangente au flanc droit du profil et la ligne d'extension axiale de la face extérieure du sommet de l'onde;
- l'angle de montée de l'onde (α) d'un sommet d'onde est l'angle formé entre la droite radiale qui coupe la largeur de l'onde (B) en son milieu et la tangente au flanc du profil du sommet de l'onde;
- la tangente au flanc du profil est définie comme suit:

(i) la tangente au flanc du profil est, pour les ondes dont les flancs présentent un tracé essentiellement linéaire, la tangente à la face extérieure du flanc du profil au niveau du milieu de la hauteur d'onde (H), c'est-à-dire la tangente à mi-hauteur de l'onde et/ou la tangente à la face extérieure du flanc du profil dans la zone centrale du tracé du flanc du profil ;

(ii) pour les ondes dont les flancs présentent une courbure convexe sur la majeure partie de leur longueur, la tangente au flanc est une tangente fictive formée par la ligne d'intersection du flanc, dont le premier point d'intersection se situe aux deux tiers de la hauteur de l'onde (H) et le second aux un tiers de la hauteur de l'onde (H).

14. Conduit ondulé en plastique selon la revendication 13,
   **caractérisé en ce que**

   Relation 1.1:
   **que** la relation 1 (variante de profil d'onde 1) s'applique en combinaison avec une ou plusieurs des relations suivantes :

   -

$$A2/2 < A1/2$$

   -

$$\alpha2 = \alpha1$$

   -

$$T2 = T1$$

   ou

   Relation 1.2:
   **que** la relation 2 (variante de profil d'onde 2) s'applique en combinaison avec une ou plusieurs des relations suivantes:

   -

$$A2/2 < A1/2$$

   -

$$\alpha2 \neq \alpha1,$$

   de préférence $\alpha2 < \alpha1$
   -

$$T2 = T1$$

   ou

   Relation 1.3:
   **que** la relation 3 (variante de profil d'onde 3) s'applique en combinaison avec une ou plusieurs des relations suivantes :

   -

$$A2/2 = A1/2$$

   -

$$\alpha 2 \neq \alpha 1,$$

de préférence $\alpha 2 > \alpha 1$

-

$$T2 = T1$$

$$\alpha 2 \neq \alpha 1,$$

de préférence $\alpha 2 > \alpha 1$

-

$$T2 = T1$$

Fig. 1d

Fig. 1c

Fig. 1b

Fig. 1a

Fig. 1.3x

Fig. 1.2x

Fig. 1.1x

Fig. 1.3y

Fig. 1.2y

Fig. 1.1y

Fig. 2

**IN DER BESCHREIBUNG AUFGEFÜHRTE DOKUMENTE**

**In der Beschreibung aufgeführte Patentdokumente**

- US 6024130 A
- EP 2431642 A2
- EP 4119830 A
- CN 112932906 A
- DE 202020105627 U1